Europäisches Patentamt

European Patent Office

Office européen des brevets

(11) Publication number: **0 025 989**
**B1**

# EUROPEAN PATENT SPECIFICATION

(45) Date of publication of patent specification: **15.02.84**

(51) Int. Cl.³: **B 23 K 9/28**

(21) Application number: **80105610.2**

(22) Date of filing: **18.09.80**

(54) Gas tungsten arc welding torch and welding process.

(30) Priority: **20.09.79 US 77208**
**20.09.79 US 77210**

(43) Date of publication of application:
**01.04.81 Bulletin 81/13**

(45) Publication of the grant of the patent:
**15.02.84 Bulletin 84/7**

(84) Designated Contracting States:
**BE CH DE FR GB IT LI SE**

(56) References cited:
**FR - A - 1 421 873**
**GB - A - 1 034 762**
**US - A - 2 928 933**
**US - A - 3 992 603**
**US - A - 4 040 426**

(73) Proprietor: **WESTINGHOUSE ELECTRIC**
**CORPORATION**
**Westinghouse Building Gateway Center**
**Pittsburgh Pennsylvania 15222 (US)**

(72) Inventor: **Schneider, Urban August**
**610 Riviera Bay Drive, N.E.**
**St. Petersburg Florida 33 702 (US)**
Inventor: **Glatthorn, Raymond Harold**
**5200 14 Street N.E.**
**St. Petersburg Florida (US)**
Inventor: **Monley, Robert Edward**
**4610 Longfellow Avenue**
**Tampa Florida 33609 (US)**
Inventor: **Nelson, Robert Lee**
**8726 Hickorywood Lane**
**Tampa Florida 33 615 (US)**

(74) Representative: **Fleuchaus, Leo, Dipl.-Ing. et al,**
**Melchiorstrasse 42**
**D-8000 München 71 (DE)**

Courier Press, Leamington Spa, England.

Gas tungsten arc welding torch and welding process

This invention pertains generally to a gas tungsten arc welding torch particularly for deep groove, narrow gap welding and a method of using such torch.

Gas tungsten arc welding processes achieve coalescence by heating the weld zone with an arc struck between a tungsten electrode and the workpiece. To prevent oxidation, the heated weld zone, the molten metal and the non-consumable electrode which carries the welding current, are shielded from the atmosphere by an inert gas stream which is directed from the electrode holder, commonly referred to as the welding torch.

Most commercial torch designs employ a collet within the main torch body for supporting and transferring weld current to the tungsten electrode. The electrode generally extends from the collet, axially through a surrounding gas nozzle and projects a short distance beyond the nozzle orifice. The shield gas is conveyed through the nozzle, along the electrode and out of the orifice to the weld.

Shield gas coverage is an important factor in establishing a successful weld with the gas tungsten arc welding process. Adequate shield gas coverage is critically important when welding high strength, low alloy steels such as A533, which is used in the manufacture of steam generators. This material is extremely difficult to weld utilizing the gas tungsten arc welding process due to the high stresses set up in the material from the quench and temper techniques' employed in its manufacture. The highly stressed material readily oxidizes on contact with air. A superheated welding puddle applied with the tungsten inert gas arc welding process on such carbon and low alloy steels shows a higher propensity for oxidation than would be encountered in welding higher alloy steels. High porosity, excess surface oxidation, embrittlement and cracking can result from a lack of adequate shielding in such applications. Because of these characteristics of carbon and low alloy steels and the difficulty in obtaining adequate shield gas coverage, the welding industry has experienced only limited success in applying the gas tungsten arc welding process. A more conventional slag producing welding process is usually employed through the industry for joining materials of this type in semiautomated manufacturing applications. While the conventional slag bearing welding process is satisfactory for a number of semiautomated manufacturing operations, it has not produced as high a quality of weld as the tungsten inert gas arc welding process. In addition, the slag bearing process requires that the welding operation be performed in a flat, downhand (1G) position which is not always practical. For example, in a number of manufacturing arrangements and field service applications it is desirable to apply the weld in a horizontal (2G) position.

The ability to achieve adequate shield gas coverage while utilizing the gas tungsten arc welding process is further complicated when the process is applied in a deep, narrow groove. A deep, narrow groove weld prep is desirable because it reduces the amount of the weld deposit required and the time it takes to complete the weld. Such grooves may extend in excess of 7 cm. in depth, have a root radius in the order of 5.6 mm. radius or smaller and as little as a 1°, to an 8°, included angle. The geometry and restrictiveness of the groove thus makes it difficult to maintain complete gas coverage of the weld puddle until coalescence is achieved. In addition, the use of a light shield gas, composed of for example 75% helium and 25% argon, which is desirably employed in such applications, adds to the difficulty in establishing good shield coverage. Furthermore, while welding in the 2G position, the hot metal adjacent the weld groove heats the surrounding air which rises and creates a draft in the weld groove (chimney effect) which draws away the gas coverage.

A gas shielded arc torch is known from GB—A—1 034 762 provided with a gas nozzle which includes easily exchangeable wire screens providing for laminar shielding gas flow for larger undisturbed flow which permits the electrode to project further for better operator visibility. However, such arrangements are not usable in narrow groove welding operations since the gas reflected outwardly from the inner end of the groove would disturb the laminar gas flow surrounding the electrode and would cause turbulence and possibly weld defects.

US—A—2928933 discloses an arc shield for providing a uniform inert-gas mantle which blankets the work-piece in front of and behind the point of welding. This inert-gas shielding mantle inhibits oxidation at the point of weld. The arc shield is formed of an electrically insulating material.

Accordingly, it is the principal object of this invention to provide a new welding torch design that will provide adequate shield gas coverage in a deep, narrow groove, applying the gas tungsten arc welding process in the 2G position to high strength, low alloy steels, such as A533 and a method of performing narrow-groove welds with such torch.

This object is achieved by the invention as characterised in claims 1 and 5; preferred embodiments of the invention are characterized in the subclaims.

The invention will become more readily apparent from the following description of a preferred embodiment thereof shown, by way of example only, in the accompanying drawings, in which:

Figure 1 is a cross sectional view of a welding torch embodying the concepts of this invention;

Figure 2 is a cross sectional view taken along lines II—II of Figure 1;

Figure 3 is a top view of a portion of the gas nozzle shown in Figure 2;

Figure 4 is a cross sectional view of the gas nozzle of Figure 3 taken along the lines IV—IV thereof; and

Figure 5 illustrates a deep, narrow groove weld joint with the welding torch gas nozzle inserted to weld depth.

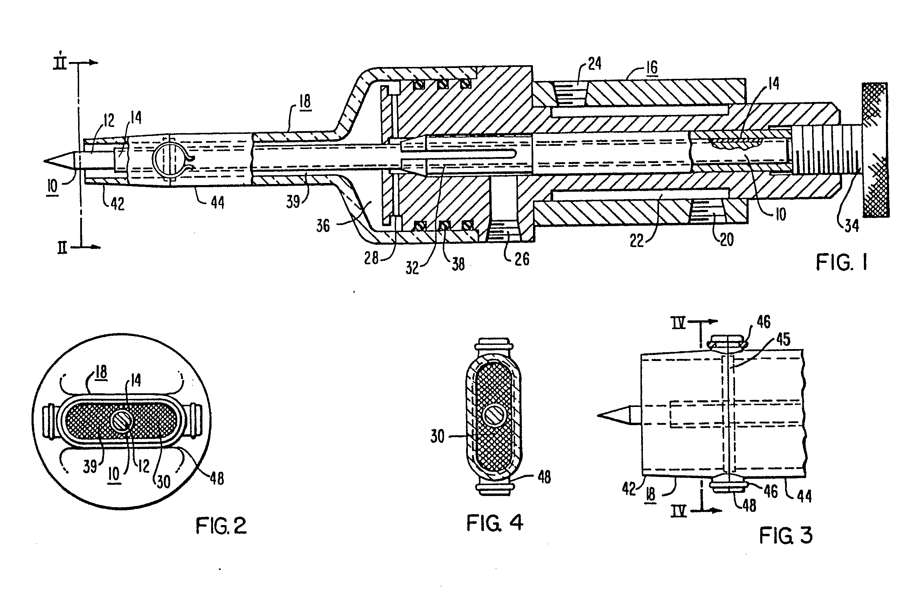

In accordance with this invention, as shown in Figure 1, an improved gas tungsten arc welding torch is provided designed for deep, narrow groove applications. The main components of the torch include the torch body 16, the gas nozzle 18 and the composite electrode 10. In the preferred embodiment the torch body 16 is constructed from copper and serves as a large heat sink with direct water coolant applied through inlet 24, circulated around the housing through an annular conduit 22 and exhausted at the water outlet port 20. The shield gas is introduced through gas inlet 26 and is directed along the centrally disposed electrode 10 and through the gas ports 28 to the inside periphery of the nozzle chamber 36. The portion of the main torch body in contact with the gas nozzle 18 has a circular cross section and the gas ports 28 are radially disposed around the circumference of the inner walls of the chamber 36.

The nozzle is formed from an electrical insulating material (i.e. ceramic) to isolate the electrode from contact with the side walls of the weld groove. The nozzle also functions to channel the shield gas from the main torch body to the weld puddle in a manner to establish laminar flow and assure satisfactory shield coverage of the weld. The enlarged end of the nozzle 18 is sealably coupled to the torch body 16 by the O rings 38 and, desirably, is mounted to be rotatable about the longitudinal axis of the electrode 10. The nozzle is tapered downstream of the chamber 36 to permit full insertion into a deep narrow groove. The tapered interior width 39 of the nozzle is gauged to supply proper clearance for the electrode 10 and establish an annular gas channel to funnel the shield gas to the orifice. A diffusion lens arrangement 30 having multiple layers of progressively finer gauged screening is disposed in the tapered portion of the gas channel, proximate to and upstream of the orifice. The tapered portion of the nozzle has an oblong cross section as shown in Figure 2, to maximize the shield gas coverage within the narrow, deep groove geometry of the weld prep.

As can be noted by reference Figures 1 and 3 the tapered portion of the nozzle is constructed in two separate parts, a lower nozzle section 42 and an upper nozzle section 44 joined at a mating flange 48 by ring clamps 46. The mating flange is machined with an interior ledge 45 which captures and supports the removable, replaceable diffuser lens 30.

The welding electrode is channeled through a central annulus within the main torch body and is captured and partially supported by the collet 32, which transfers the welding current to the electrode. A knurled nut 34 at the upper end of the torch body serves to capture the electrode within the central annulus. The electrode 10 is a composite structure formed by flame spraying an electrically conductive material of low resistivity 14 onto a tungsten center 12. The copper coating minimizes the amount of resistance heating generated by the welding current as it traverses the electrode to the arc.

Experimental results have shown that an improvement in laminar flow can be achieved with the diffusion lens 30 located from 1.2 to 3.8 cm. from the nozzle orifice; with optimum results established with the diffusion lens located 2.2 to 2.5 cm. from the orifice. The copper cladding extends over the length of the electrode through and to a point downstream of the diffusion lens to reduce localized heating of the lens material and terminates at or before the orifice. The tungsten electrode bared of copper cladding desirably extends up to 3.2 cm. beyond the tip of the orifice.

Thus, in accordance with this invention the following benefits are realized. Electrical contact is made with the conducting copper cladding of the electrode at the main torch body, where a large copper heatsink and direct water cooling is provided. The controlled operating environment in this portion of the torch thus enables the collet to maintain good electrical contact with the electrode, which increases the efficiency of the weld current transfer and reduces localized resistance heating which might otherwise accelerate wear of the various torch components. The gas radially exiting from the ports 28, impinging upon the side walls of the chamber 36, experiences a large pressure drop and good mixing which serves to reduce preferential flow of the gas through the tapered volume 39, which might otherwise be encountered from wall resistance along the gas passage. The gas diffuser lenses 30 consisting of fine mesh screens of multiple sizes combined in a tandem packet provide additional back pressure and/or gas pressure drop; diffuse the inert shield gas; cause laminar gas flow characteristics through the remainder of the nozzle; and project a columnated laminar gas stream beyond the orifice onto the welding arc and molten weld puddle. The copper clad tungsten electrode reduces the vulnerability of the mesh diffuser screens to the high rate of heat radiation eminating from the uncoated extended end of the tungsten electrode. The copper cladding extends through a small closely fitting opening within the diffuser screens, sized to prohibit gas leakage. Experimental results have shown that the cladding maintains the tungsten at a low enough temperature to avoid oxidation and deterioration of the screens, which is normally inherent in such designs. The detachable nozzle sections not only allow servicing of the diffuser screens without removal of the nozzle, but also permit replacement of the orifice section alone. It is not uncommon to experience damage to the nozzle orifice while oscillating in a narrow groove. In addition, the O-ring compressed seal arrangement between the nozzle and the mating torch body enables easy replacement of the entire nozzle to accommodate different nozzle sizes. Furthermore, the coupling arrangement of the nozzle to the main torch body enables rotation of the nozzle about the electrode to accommodate orientation of the oblong tapered portion of the nozzle within a narrow groove without altering the disposition of the main torch body.

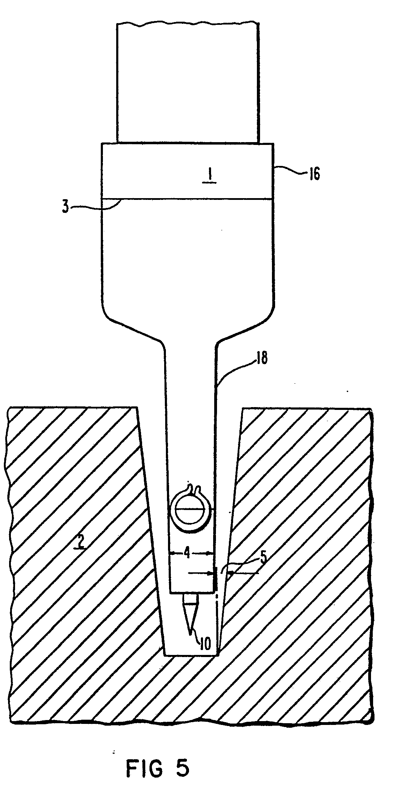

Referring to Figure 5, there is shown the application of the torch in welding a deep, narrow groove joint 5 is illustrated having a 6° to 8° included angle wherein a tungsten inert gas welding torch 11 has its gas nozzle 18 fully inserted within the groove in a workpiece 2 with the welding electrode 10 protruding slightly beyond the orifice of the nozzle 18. Coalescence of the weld is achieved by an arc struck between the welding electrode 10 and the workpiece 2. The quality of the weld established is dependent upon the adequacy of the shield gas coverage provided at the nozzle orifice. Improved shield gas coverage, and thus improved weld quality, is achieved by incrementally increasing the width of the nozzle at preselected elevations in the depth of the weld groove as the nozzle is withdrawn from the groove during successive weld passes, to correspond to increases in the width of the joint.

When the welding torch reaches designated elevations in the weld groove, in the course of successive weld passes, the torch 1 is withdrawn and the nozzle 18 is disconnected from the torch at the juncture 3 and replaced with a comparable nozzle having a larger orifice width 4 to correspond to the enlarged area of the groove at the weld depth. Experimental results have shown that it is advantageous if the preselected elevations are chosen so that the desired gas shield area around the weld puddle does not exceed approximately 1.25 times the nozzle width. For example, it has been shown that for a deep narrow groove extending in depth to 10 cm. and having a 6°—8° included angle that as many as 5 nozzles, progressively larger in width, are required to achieve optimum weld quality.

Progressively increasing the gas nozzle width, incrementally, upon successive weld passes, substantially increases the quality of the welds achieved in high strength, low alloy steels, such as A533.

## Claims

1. A gas tungsten arc welding torch comprising: a main torch body (16), a nonconsumable welding electrode (10) supported by the main torch body (16) and having an end extending therefrom, and an elongated gas nozzle (18) detachably connected at one end to the main torch body (16) and surrounding a substantial portion of the welding electrode (10), said nozzle (18) being in communication with a gas port (28) within the main torch body (16) and defining a gas passage along the electrode (10), and a gas lens (30) disposed within the gas passage of the nozzle (18) substantially adjacent the free end of the nozzle (18) for establishing a laminar flow of gas parallel to the electrode (10) downstream of the lens (30), the lens (30) being supported by the nozzle (18), characterized in that the gas nozzle (18) has a section (42, 44) which is adapted for insertion into a groove when welding narrow groove joints, the section (42, 44) containing the lens (30) and being of oblong cross-section, and in that the gas nozzle (18) is held to the main torch body (16) by compressed sealing means (38) for fast exchange of nozzles of differing sizes.

2. A gas tungsten arc welding torch according to claim 1, characterized in that the electrode (10) comprises a solid tungsten rod center and a concentric outer sleeve (14) substantially lower in electrical resistivity than the tungsten rod, adhesively and cohesively bonded to the tungsten, and that the outer sleeve (14) extends from the point of electrical connection within the main torch body (16) through the closely fitting lens (30) to a point of the tungsten electrode downstream of the gas lens (30).

3. A gas tungsten arc welding torch according to claim 1, characterized in that the gas lens (30) is located from 2,3 to 2,5 cm upstream from the end of the nozzle (18).

4. A gas tungsten arc welding torch according to claim 1, 2 or 3, characterized in that the gas nozzle (18) is mounted to the main torch body (16) in a manner to be rotatable about the axis of the electrode (10).

5. A gas tungsten arc welding torch according to any of claims 1 to 4, characterized in that the gas nozzle (18) comprises an upper section (44) and a detachable lower orifice section (42), and that a mating flange with an interior ledge (45) is provided therebetween which captures and supports the removable, replaceable diffuser lens (30).

6. A method of welding a deep, narrow groove joint with a tungsten arc welding torch as claimed in any of claims 1 to 5, wherein said gas nozzle (18) is sized to extend into the narrow groove joint, characterized in that, incrementally, the width of the nozzle (18) is increased to correspond to increases in the width of the groove (5) at preselected width values of the groove (5) as the nozzle is withdrawn from the groove during successive weld passes.

7. A method according to claim 6, characterized in that the preselected width values are chosen so that they do not substantially exceed 1,25 times the nozzle width.

8. A method according to claim 6 to 7, characterized in that the increase in nozzle width is achieved by replacing the nozzle (18) on the welding torch with progressively larger nozzles as preselected elevations are reached during successive weld passes.

## Patentansprüche

1. Wolfram-Gasbogenschweißbrenner mit einem Brennerhauptteil (16), mit einer aus dem Brennerhauptteil (16) mit ihrem einen Ende herausragenden nichtabschmelzenden Elektrode (10), mit einer langgestreckten Gasdüse (18), die mit ihm einen Ende abnehmbar an dem Brennerhauptteil (16) angebracht ist und einen wesentlichen Teil der Schweißelektrode (10) umgibt, wobei die genannte Düse (18) in Verbindung mit einer Gasöffnung (28) innerhalb des Brennerhauptteils (16) steht und einen Gasdurchlaß an der Elektrode (10) entlang definiert, und mit einer Gaslinse (30) innerhalb des Gasdurchlasses der Düse (18) nahe dem freien Ende der Düse (18) zur Bildung eines parallel zu der Elektrode (10) fließenden laminaren Gasstroms unterhalb der Linse (30), dadurch gekennzeichnet, daß die Gasdüse (18) einen Abschnitt (42, 44) aufweist, der sich in eine Fuge einführen läßt, wenn schweißverbindungen in engen Fugen hergestellt werden müssen, daß dieser Abschnitt die Linse (30) enthält und einen länglichen Querschnitt besitzt, und daß die Gasdüse von dem Brennerhauptteil (16) durch Druckdichtungselemente gehalten wird und auf diese Weise ein schneller Austausch von Düsen unterschiedlicher Größe vorgenommen werden kann.

2. Wolfram-Gasbogenschweißbrenner nach Anspruch 1, dadurch gekennzeichnet, daß die Elektrode (10) einen zentralen starren Wolframstab und eine mit dem Wolfram durch Adhäsion und Kohäsion fest verbundene konzentrische Außenhülse (14) aufweist, deren spezifischer elektrischer Widerstand niedriger ist als derjenige des Wolframstabes, und daß die Außenhülse (14) von dem elektrischen Anschlußpunkt innerhalb des Brennerhauptteils (16) durch die enganschließende Linse (30) hindurch bis zu einem Punkt an der Wolframelektrode in Gasströmungsrichtung unterhalb der Gaslinse (30) reicht.

3. Wolfram-Gasbogenschweißbrenner nach Anspruch 1, dadurch gekennzeichnet, daß die Gaslinse (30) sich 2,3 bis 2,5 cm in Strömungsrichtung oberhalb des Endes der Düse (18) befindet.

4. Wolfram-Gasbogenschweißbrenner nach einem der Ansprüche 1 bis 3, dadurch gekennzeichnet, daß die Gasdüse (18) an dem Brennerhauptteil (16) um die Achse der Elektrode (10) drehbar angebracht ist.

5. Wolfram-Gasbogenschweißbrenner nach einem der Ansprüche 1 bis 4, dadurch gekennzeichnet, daß die Gasdüse (18) einen oberen Abschnitt (44) und einen abnehmbaren unteren Austrittsabschnitt (42) besitzt, und daß ein Anschlußflansch mit einer dazwischenliegenden Innenrippe (45) vorgesehen ist, die die herausnehmbare und austauschbare Gaslinse (30) hält und abstützt.

6. Verfahren zum Herstellen einer Schweißverbindung in einer tiefen, engen Fuge mit einem Wolfram-Gasschweißbrenner nach einem der Ansprüche 1 bis 5, wobei die Abmessungen der Gasdüse (18) so gewählt sind, daß sie in die enge Fuge einführbar ist, dadurch gekennzeichnet, daß die Breite der Düse (18) schrittweise vergrößert wird, um sie der Breitenzunahme der Fuge (5) bei vorgewählten Werten der Breite der Fuge (5) anzupassen, wenn die Düse während der Herstellung aufeinanderfolgender Schweißlagen aus der Fuge herausgehoben wird.

7. Verfahren nach Anspruch 6, dadurch gekennzeichnet, daß die vorgewählten Breitenwerte so bestimmt werden, daß sie die 1,25fache Düsenbreite nicht wesentlich überschreiten.

8. Verfahren nach Anspruch 6 oder 7, dadurch gekennzeichnet, daß die Zunahme der Düsenbreite herbeigeführt wird, indem die Düse (18) an dem Schweißbrenner gegen zunehmend breitere Düsen ausgetauscht wird, wenn während aufeinanderfolgender Schweißlagen vorgewählte Anhebungswerte erreicht sind.

## Revendications

1. Torche de soudage à l'arc sous protection gazeuse avec électrode réfractaire, comprenant un corps principal (16) de torche, une électrode réfractaire (10) de soudage supportée par ce corps principal (16) de torche et dont l'extrémité se prolonge au delà de ce dernier, une buse allongée (18) à gaz montée de manière amovible sur une extrémité du corps principal (16) de torche et entourant une partie sensible de l'électrode (10) de soudage, cette buse (18) communiquant avec un orifice (28) de sortie du gaz situé à l'intérieur du corps principal (16) de torche et formant un passage du gaz le long de l'électrode (10), et un diffuseur (30) de gaz monté dans le passage du gaz de la buse (18) sensiblement au voisinage de l'extrémité libre de la buse (18) pour établir un écoulement laminaire de gaz parallèlement à l'électrode (10) en aval du diffuseur (30), ce dernier étant supporté par la buse (18), cette torche de soudage à l'arc étant caractérisée en ce que la buse (18) à gaz présente une partie (42, 44) prévue pour être introduite dans un joint lorsqu'on utilise des joints de soudure profonds et étroits, cette partie (42, 44) contenant le diffuseur (30) et ayant une section droite oblongue; et en ce que la buse à gaz est maintenue sur le corps principal (16) de torche par des moyens comprimés (38) d'étanchéité, de manière à permettre un changement rapide de buses de différentes dimensions.

2. Torche de soudage à l'arc sous protection gazeuse avec électrode réfractaire suivant la revendication 1, caractérisée en ce que l'électrode (10) comprend une âme pleine en tungstène et un enrobage concentrique extérieur (14) présentant une résistivité électrique sensiblement plus faible que celle de l'âme en tungstène, liée de manière adhérente et cohésive au tungstène; et en ce que ce enrobage extérieur (14) se prolonge depuis le point de connexion électrique dans le corps principal (16) de torche, en passant par le diffuseur (30) à emmanchement serré, jusqu'à un certain point de l'électrode réfractaire situé en aval du diffuseur (30) de gaz.

3. Torche de soudage à l'arc sous protection gazeuse avec électrode réfractaire suivant la revendication 1, caractérisée en ce que le diffuseur (30) de gaz est monté de 2,3 à 2,5 cm en amont de l'extrémité de la buse (18).

4. Torche de soudage à l'arc sous protection gazeuse avec électrode réfractaire suivant l'une quelconque des revendications 1, 2 ou 3, caractérisée en ce que la buse (18) à gaz est montée sur le corps principal (16) de torche de manière à pouvoir tourner autour de l'axe de l'électrode (10).

5. Torche de soudage à l'arc sous protection gazeuse avec électrode réfractaire suivant l'une quelconque des revendications 1 à 4, caractérisée en ce que la buse (18) à gaz comprend une partie supérieure (44) et une partie inférieure amovible (42) formant orifice; et en ce qu'une bride d'assemblage avec un rebord intérieur (45) est prévue entre ces parties, ce rebord intérieur recevant et supportant le diffuseur amovible remplaçable (30).

6. Procédé de soudage d'un joint profond et étroit au moyen d'une torche de soudage à l'arc sous protection gazeuse avec électrode réfractaire suivant l'une quelconque des revendications 1 à 5, dans lequel la buse (18) à gaz est dimensionnée pour se prolonger dans le joint profond et étroit, ce procédé de soudage étant caractérisé en ce que la largeur de la buse (18) est augmentée progressivement afin de correspondre aux augmentations de largeur du joint (5), à des valeurs présélectionnées de largeur de ce joint (5), au fur et à mesure que la buse est retirée du joint au cours des passes successives de soudure.

7. Procédé suivant la revendication 6, caractérisé en ce que les valeurs présélectionnées de largeur sont choisies de manière à ne pas dépasser sensiblement 1,25 fois la largeur de la buse.

8. Procédé suivant les revendications 6 et 7, caractérisé en ce que l'augmentation de largeur de la buse est réalisée par le remplacement de la buse (18) sur la torche de soudage par des buses progressivement plus larges au fur et à mesure que les niveaux présélectionnés du joint sont atteints au cours des passes successives de soudure.

FIG. I

FIG. 2

FIG. 3

FIG. 4

FIG 5